# EUROPEAN PATENT APPLICATION

(11) **EP 4 033 439 A1**
(43) Date of publication of application: **27.07.2022**
(21) Application number: 21819713.5
(22) Date of filing: 21.05.2021
(51) Int. Cl.: G06Q 30/06

(54) **COMMODITY PROCESSING METHOD AND COMPONENT, ELECTRONIC DEVICE, AND COMPUTER-READABLE MEDIUM**

(30) Priority: 30.11.2020 CN 202011379415
(71) Applicant: BEIJING BAIDU NETCOM SCIENCE TECHNOLOGY CO., LTD., No. 10 Shangdi 10th Street Haidian District Beijing 100085 (CN)
(72) Inventor: CAO, Jiao, Beijing 100085 (CN); SHI, Nansheng, Beijing 100085 (CN)
(74) Representative: Carpmaels & Ransford LLP
(86) International application number: PCT/CN2021/095212
(87) International publication number: WO 2022/110694

(57) **Abstract**

An applet-based method of processing a commodity is provided, which relates to a field of an applet technology. The applet is pre-integrated with an address component and a payment component. The method of processing the commodity includes: displaying (S1) a commodity landing page in response to a commodity landing page call request of a host platform; acquiring (S2) a delivery address information for a user on a commodity order settlement page by using a preset address component, in response to a user operation of placing an order for the commodity on the commodity landing page; and calling (S3) a preset payment component to perform an order payment operation, in response to a user operation of submitting the order, so as to generate a commodity order. A component of processing a commodity applied to an applet, an electronic device, and a computer-readable medium are further provided.

## Description

### TECHNICAL FIELD

The present disclosure relates to a field of a computer technology, in particular to a field of an applet technology, and more particularly to an applet-based method and component of processing a commodity, an electronic device, and a computer-readable medium.

### BACKGROUND

With a development of the Internet, commodity shopping methods are becoming more and more diversified, and a shopping method based on class II e-commerce is becoming more and more popular. In a related art, a class II e-commerce platform may actively recommend a commodity for a user when the user is browsing a page or a video, so as to direct the user to enter an application (APP) where the commodity is located through an entry to the recommended commodity or contact a customer service of the commodity to view and purchase the commodity.

### SUMMARY

The present disclosure provides an applet-based method and component of processing a commodity, an electronic device, and a computer-readable medium.

In a first aspect, the present disclosure provides an applet-based method of processing a commodity, including: displaying a commodity landing page in response to a commodity landing page call request of a host platform; acquiring a delivery address information for a user on a commodity order settlement page by using the preset address component, in response to a user operation of placing an order for the commodity on the commodity landing page; and calling the preset payment component to perform an order payment operation, in response to a user operation of submitting the order, so as to generate a commodity order.

In a second aspect, the present disclosure provides a component of processing a commodity applied to an applet, including: a landing page display module configured to display a commodity landing page in response to a commodity landing page call request of a host platform; a settlement page generation module configured to acquire a delivery address information for a user on a commodity order settlement page by using a preset address component, in response to a user operation of placing an order for the commodity on the commodity landing page; and an order payment module configured to call a preset payment component to perform an order payment operation, in response to a user operation of submitting the order, so as to generate a commodity order.

In a third aspect, the present disclosure provides an electronic device, including: at least one processor; and a memory communicatively connected to the at least one processor, the memory stores one or more instructions executable by the at least one processor, and the one or more instructions, when executed by the at least one processor, cause the at least one processor to implement the method of processing the commodity described above.

In a fourth aspect, the present disclosure provides a computer-readable storage medium having a computer program stored thereon, and the computer program, when executed, is allowed to implement the method of processing the commodity described above.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to provide a further understanding of the present disclosure and constitute a part of the specification. Together with the embodiments of the present disclosure, the accompanying drawings are used to explain the present disclosure, but do not constitute a limitation to the present disclosure. The above and other features and advantages will become more apparent to those skilled in the art by describing the detailed example embodiments with reference to the accompanying drawings.
FIG. 1 shows a flowchart of an applet-based method of processing a commodity provided by the embodiments of the present disclosure.
FIG. 2 shows a flowchart of another method of processing a commodity provided by the embodiments of the present disclosure.
FIG. 3 shows a flowchart of another method of processing a commodity provided by the embodiments of the present disclosure.
FIG. 4 shows a flowchart of another method of processing a commodity provided by the embodiments of the present disclosure.
FIG. 5 shows a flowchart of yet another method of processing a commodity provided by the embodiments of the present disclosure.
FIG. 6 shows a block diagram of a component of processing a commodity applied to an applet provided by the embodiments of the present disclosure.
FIG. 7 shows a block diagram of an electronic device provided by the embodiments of the present disclosure.

### DETAILED DESCRIPTION OF EMBODIMENTS

In order to enable those skilled in the art to better understand the technical solution of the present disclosure, the exemplary embodiments of the present disclosure are described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

In a case of no conflict, the embodiments of the present disclosure and the features in the embodiments may be combined with each other.

The term "and/or" as used here includes any and all combinations of one or more related listed items.

The terms used herein are only used to describe specific embodiments and are not intended to limit the present disclosure. As used herein, the singular forms "a" and "the" are also intended to include a plural form unless the context clearly indicates otherwise. It should also be understood that when terms "including" and/or "made of' are used in the specification, it means that the described features, wholes, steps, operations, elements and/or components are present, but do not exclude the presence or addition of one or more other features, wholes, steps, operations, elements, components and/or combinations thereof. The words "connected," "coupled," or the like are not limited to a physical or mechanical connection, but may include an electrical connection, whether direct or indirect.

Unless otherwise defined, all terms (including technical and scientific terms) used herein have the same meaning as those generally understood by those of ordinary skilled in the art. It will also be understood that terms such as those defined in common dictionaries should be interpreted as having a meaning consistent with their meaning in the context of the related technology and the present disclosure, and will not be interpreted as having an idealized or excessive formal meaning, unless expressly so limited herein.

In a related art, in a plurality of class II e-commerce advertising scenarios, when a user is directed to a commodity details page through an e-commerce advertising material and places an order, the user needs to log in, verify, fill in a consignee and a delivery address, and on most pages after filling in the information, a payment cannot be made directly, but generally through a docking with a customer service or a micro business merchant, or through a cash on delivery mechanism. An ordering and payment process includes a long operation process and the user is required to carry out a plurality of operations, which results in a poor shopping experience of the user. Moreover, according to a traffic conversion funnel principle, in the entire ordering and payment process, due to the cumbersome and fragmented process, each step of the process may lose the user who originally prepared to place the order, it tends to reduce a user's interest in the commodity, and then lead to a decline in an order quantity of the commodity.

To this end, the present disclosure provides an applet-based method and component of processing a commodity, an electronic device, and a computer-readable medium. The method may shape a new type of class II e-commerce shopping mode, which may effectively solve the above-mentioned technical problem existing in the related art.

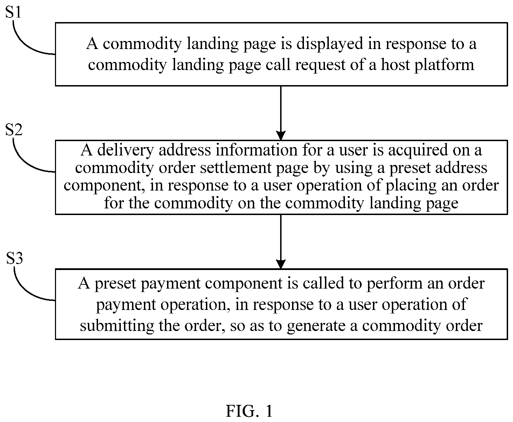

FIG. 1 shows a flowchart of an applet-based method of processing a commodity provided by the embodiments of the present disclosure.

Referring to FIG. 1, the embodiments of the present disclosure provide an applet-based method of processing a commodity, which may be performed by a component of processing a commodity. The component may be implemented by software and/or hardware, and may be integrated in an electronic device such as a server. The method of processing the commodity may include following steps.

In step S1, a commodity landing page is displayed in response to a commodity landing page call request of a host platform.

In step S2, a delivery address information for a user is acquired on a commodity order settlement page by using a preset address component, in response to a user operation of placing an order for the commodity on the commodity landing page.

In step S3, a preset payment component is called to perform an order payment operation, in response to a user operation of submitting the order, so as to generate a commodity order.

According to the applet-based method of processing the commodity provided by the embodiments of the present disclosure, after the host platform recommends a commodity advertisement to the user, when the user clicks the commodity advertisement on the host platform, the commodity landing page may be displayed by calling the applet. The applet is pre-integrated with the address component and the payment component, so that when the user places an order, the address component may be called to acquire the delivery address information for the user, and the payment component may be called to perform the payment operation, which may effectively shorten a shopping and ordering process of the user. In this way, in the class II e-commerce scenario, the user may quickly perform the ordering operation, the shopping experience of the user may be improved, and then an order conversion rate of the commodity may be effectively improved.

In the embodiments of the present disclosure, the host platform is an application (APP) that may host running of the applet and serve as a host of the applet, and the host platform may also be referred to as a "host APP".

In the embodiments of the present disclosure, the host platform may be pre-integrated with a software development kit (SDK) of a commercial advertising alliance platform, which is used to push a commodity material information to the host platform. Furthermore, the software development kit (SDK) of the commercial advertising alliance platform may be integrated with an applet runtime SDK, so that the commodity landing page of the host platform may be loaded through the applet. Alternatively, the host platform may be pre-integrated with the applet runtime SDK, and the applet runtime SDK may be excluded when the host platform introduces the SDK of the commercial advertising alliance platform, so as to avoid a repeated introduction of the applet runtime SDK and an increase of a volume of an applet package. The commodity material information pushed by the software development kit (SDK) of the commercial advertising alliance platform may include but is not limited to a title of the commodity, a creative description information, a posted commodity picture, a path of the corresponding applet landing page, and so on.

In the embodiments of the present disclosure, when developing the applet through an applet development platform, a developer may pre-submit the commodity material information for the commodity requiring a traffic driving to the applet development platform. The applet development platform may audit the commodity material information. After an audit success, the applet development platform may store the successfully audited commodity material information in a material storage system. A specific implementation form of the material storage system may be a relational database management system (MySQL), which may be called and displayed when the applet is running. When the applet is called to display the commodity landing page for the commodity, the corresponding commodity material information may be acquired through the material storage system for display on the commodity landing page.

In the embodiments of the present disclosure, before step S1, the host platform may recommend the commodity advertisement to the user, and the user may discover and browse the commodity advertisement through a variety of channels on the host platform. When the user clicks the commodity advertisement, the host platform may transmit the commodity landing page call request in response to a user operation of clicking the commodity advertisement, so as to call the applet corresponding to the commodity advertisement clicked by the user to display the corresponding commodity landing page, so that the user may view a commodity information through the commodity landing page of the applet. Therefore, in step S1, the commodity landing page call request transmitted by the host platform in response to the user operation of clicking the commodity advertisement is received, and the commodity landing page is displayed to display the commodity information in response to the commodity landing page call request of the host platform.

In the embodiments of the present disclosure, the applet development platform may pre-provide the applet developer with the address component and the payment component that may be docked with a preset server. The developer may integrate the address component and the payment component into an applet code through an applet core framework (SwanJs) provided by the platform, so that a development time may be saved.

In the embodiments of the present disclosure, step S2 may further include step S20 before the delivery address information for the user is acquired on the commodity order settlement page by using the preset address component. In step S20, the commodity order settlement page is generated and displayed in response to the user operation of placing the order for the commodity on the commodity landing page, and the commodity order settlement page is integrated with the address component and the payment component. On the commodity order settlement page, the address component may display a user-selected or default delivery address information, and the payment component may display a payment method for user selection.

In the embodiments of the present disclosure, before the commodity order settlement page is generated and displayed, the preset address component may be called to acquire a preset address list for the user, so that the user may select or edit the delivery address information for the user. If the user does not previously set a user address information locally in the applet, the preset address list is empty. If the user has previously set at least one user address information locally in the applet, the preset address list may contain the at least one user address information for the user. Furthermore, before the commodity order settlement page is generated and displayed, the preset payment component may be called to display a preset payment method for user selection.

Specifically, in response to the user operation of placing the order for the commodity on the commodity landing page, the address component, the payment component, a commodity information component and an order submission component may be called and stitched, so as to generate the commodity order settlement page. The commodity information component is used to display the commodity information of the commodity ordered by the user, and the order submission component is used to display an order submission entry.

In some embodiments, if the user does not previously set the user address information locally in the applet, the address component may not display any address information and may provide an entry to select or edit address on the commodity order settlement page. In some embodiments, if the preset address list contains a user address information, the address component may display the user address and further provide an entry to select or edit address on the commodity order settlement page. If the preset address list contains a plurality of user address information, the address component may only display a user address information used by the user last time or a default user address information set by the user and further provide an entry to select or edit address on the commodity order settlement page, so as to save a page space. It may be understood that the user address information and the delivery address information may include but are not limited to a user name, a user contact information (such as a mobile phone number) and a user address.

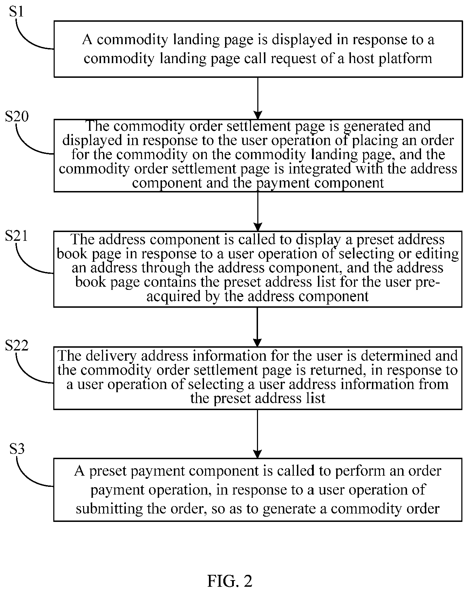

FIG. 2 shows a flowchart of another method of processing a commodity provided by the embodiments of the present disclosure. As shown in FIG. 2, in some embodiments, in step S2, the step of acquiring the delivery address information for the user on the commodity order settlement page by using the preset address component may include step S21 and step S22.

In step S21, the address component is called to display a preset address book page in response to a user operation of selecting or editing an address through the address component, and the preset address book page contains the preset address list for the user pre-acquired by the address component.

In step S22, the delivery address information for the user is determined and the commodity order settlement page is returned, in response to a user operation of selecting a user address information from the preset address list.

The delivery address information for the user is the user address information selected by the user in the preset address list.

In some embodiments, after the user performs the ordering operation through the applet and the commodity order settlement page is generated, if the user wants to select a delivery address from the preset address list, the user may enter the preset address book page from the entry to select or edit address provided by the address component on the commodity order settlement page. The preset address list for the user may be displayed on the preset address book page for user selection. After the user selects and confirms the delivery address information, the commodity order settlement page may be returned. Then, on the commodity order settlement page, the address currently displayed by the address component is changed to the delivery address information currently selected by the user.

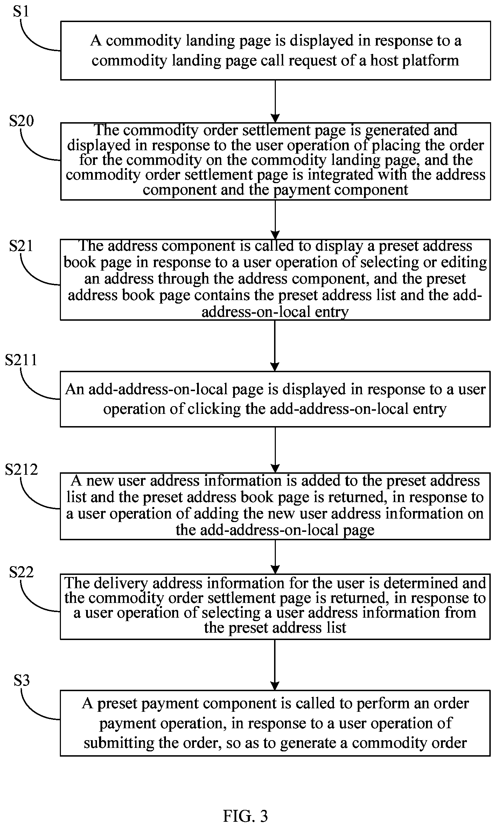

FIG. 3 shows a flowchart of another method of processing a commodity provided by the embodiments of the present disclosure. As shown in FIG. 3, in some embodiments, the preset address book page may further contain an add-address-on-local entry, and the method may further include step S211 and step S212 before step S22.

In step S211, an add-address-on-local page is displayed in response to a user operation of clicking the add-address-on-local entry.

In step S212, a new user address information is added to the preset address list and the preset address book page is returned, in response to a user operation of adding the new user address information on the add-address-on-local page.

In some embodiments, the current preset address list may not contain the delivery address information required by the user for this order, then the user may add the required delivery address information by adding an address. Therefore, in step S211, the add-address-on-local page is displayed in response to the user operation of clicking the add-address-on-local entry on the preset address book page, and in step S212, the new user address information is added to the preset address list and the preset address book page is returned in response to the user operation of adding the new user address information on the add-address-on-local page. Then the process proceeds to step S22. The user operation of adding the new user address information on the add-address-on-local page may include an operation of filling in the new user address information, and an operation of saving and using the new user address information.

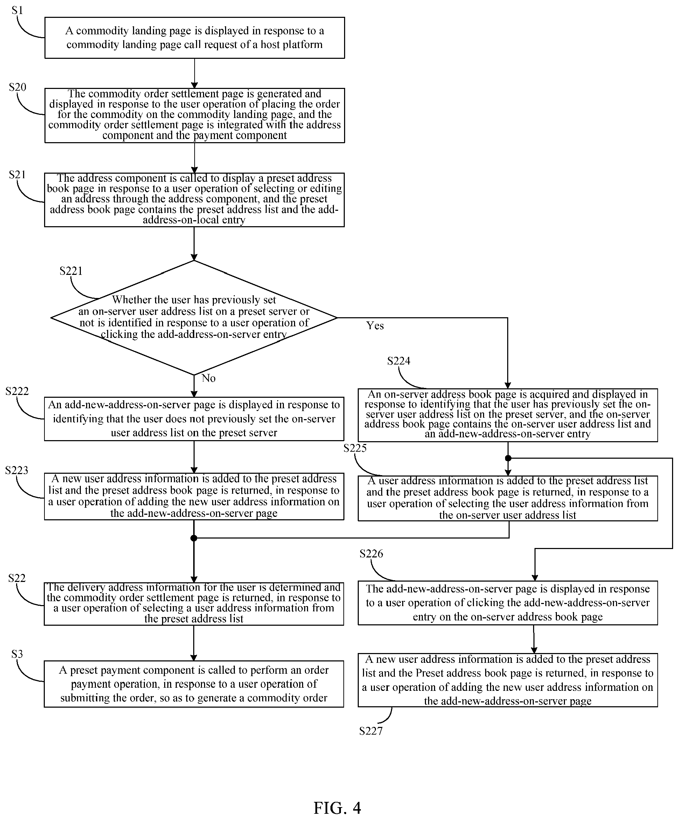

FIG. 4 shows a flowchart of another method of processing a commodity provided by the embodiments of the present disclosure. As shown in FIG. 4, in some embodiments, the preset address book page may further contain an add-address-on-server entry, and the method may further include step S221 to step S227 before step S22.

In step S221, whether the user has previously set an on-server user address list on a preset server or not is identified according to the pre-acquired user identification for the user, in response to a user operation of clicking the add-address-on-server entry. If the user has not previously set an on-server user address list on a preset server, step S222 is performed. If the user has previously set an on-server user address list on a preset server, step S224 is performed.

In step S221, since the address component may be docked with the preset server, such as BMS (Baidu Mobile Service), which may provide an online server-address-information service, when the user clicks the add-address-on-server entry on the preset address book page, the online server-address-information service may be called to query whether an on-server user address list for the user identification for the user (such as a user mobile phone number or a user ID) is previously set on the preset server or not. If the user has previously set the on-server user address list on the server, step S224 is performed. Otherwise, step S222 is performed.

In step S222, an add-new-address-on-server page is displayed in response to identifying that the user does not previously set the on-server user address list on the preset server.

Specifically, in response to identifying that the user does not previously set the on-server user address list on the preset server, the online server-address-information service of the server may be called to add an on-server address, so as to display the add-new-address-on-server page.

In step S223, a new user address information is added to the preset address list and the preset address book page is returned, in response to a user operation of adding the new user address information on the add-new-address-on-server page. Then, the process proceeds to step S22.

The user operation of adding the new user address information on the add-new-address-on-server page may include an operation of filling in the new user address information, and an operation of saving and using the new user address information.

In step S223, the new user address information added by the user may be stored in the on-server user address list for the user on the server, so as to update the on-server user address list for the user on the server.

In step S224, an on-server address book page is acquired and displayed in response to identifying that the user has previously set the on-server user address list on the preset server, and the on-server address book page contains the on-server user address list and an add-new-address-on-server entry.

Specifically, in response to identifying that the user has previously set the on-server user address list on the preset server, the online server-address-information service of the server may be called to acquire the on-server user address list previously set by the user on the server, and the on-server address book page may be displayed. The on-server user address list may contain at least one user address information previously set by the user on the server.

In step S225, a user address information is added to the preset address list and the preset address book page is returned, in response to a user operation of selecting the user address information from the on-server user address list. Then, the process proceeds to step S22.

In step S226, the add-new-address-on-server page is displayed in response to a user operation of clicking the add-new-address-on-server entry on the on-server address book page.

For a specific description of step S226, reference may be made to step S222 described above, which will not be repeated here.

In step S227, a new user address information is added to the preset address list and the preset address book page is returned, in response to a user operation of adding the new user address information on the add-new-address-on-server page. Then, the process proceeds to step S22.

For a specific description of step S227, reference may be made to step S223 described above, which will not be repeated here.

In some embodiments, in order to ensure that a user privacy is not infringed, when the user clicks the add-address-on-server entry on the preset address book page, an authorization may be firstly requested from the user. For example, a prompt information indicating whether an operation of acquiring, using and editing the on-server user address information is allowed or not may be transmitted to the user. After a confirmation of the user, a subsequent operation of acquiring, using and editing the on-server user address information may be performed. At the same time, it may be further confirmed to the user whether the on-server user address information may be distributed to other applets so as to achieve an address interoperability in a plurality of applets. After a confirmation of the user, the server may provide the user address information added by the user to other applets for the interoperability of the user address information. Otherwise, the user address information added by the user may be used only in the current applet.

In some embodiments, through a linkage of the address component, the user identification and the server, the user address information may be added by the user at one place and used directly in a plurality of applets. Address components integrated in the plurality of applets may be all docked with the preset server, so as to link with the server to acquire the user address information set by the user on the server. In this way, the user may add the delivery address information when placing orders in different applets without a repeated addition, which may shorten the ordering process of the user and improve the shopping experience of the user.

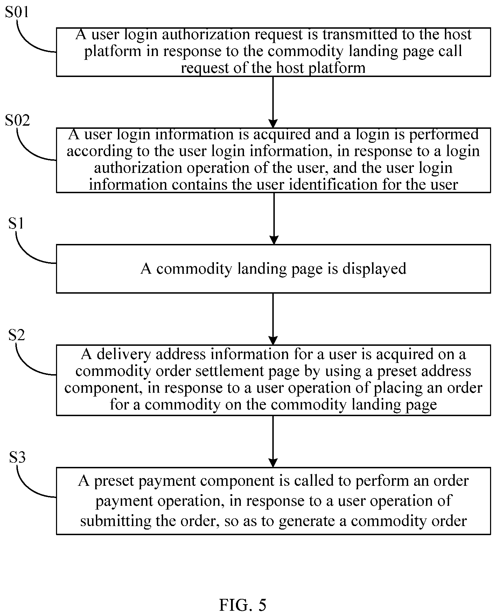

FIG. 5 shows a flowchart of another method of processing a commodity provided by the embodiments of the present disclosure. As shown in FIG. 5, in some embodiments, step S1 may further include step S01 and step S02 before the step of displaying the commodity landing page.

In step S01, a user login authorization request is transmitted to the host platform in response to the commodity landing page call request of the host platform.

In step S02, a user login information is acquired and a login is performed according to the user login information, in response to a login authorization operation of the user, and the user login information contains the user identification for the user.

In some embodiments, when receiving the user login authorization request, the host platform may transmit an authorization inquiry information to the user. After the user confirms the login authorization, the host platform may feed back the user login information, so as to log in to the applet based on the user login information.

In some embodiments, an operator "one click login" SDK may be further pre-integrated in the applet runtime SDK. When the applet is called, the user login authorization request transmitted to the user may contain a one-click-login entry, and when the user selects the one-click-login entry, the preset operator "one click login" SDK may be called to perform the login process of the applet in response to the one-click-login operation of the user. In this way, the user may quickly log in to the applet, an ordering time of the user may be reduced, and the shopping experience of the user may be improved.

In some embodiments, the user may further choose to log in to the applet by way of manually entering the user mobile phone number for authentication, or log in to the applet by way of OAuth (Open Authorization) login with an existing account on the host platform, which is not limited in the embodiments of the present disclosure.

In the embodiments of the present disclosure, the applet development platform may pre-integrate a preset cashier service SDK (such as Baidu transaction cashier service SDK) in an applet SDK framework. When developing an applet by using the applet SDK framework of the platform, the developer may integrate the corresponding payment component in the applet, and the payment component may be docked with the preset cashier service SDK. Therefore, in step S3, after the user selects the delivery address information and the payment method and submits the order, a hidden cashier service SDK is called to perform a payment operation corresponding to the selected payment method, and after the user has made the payment, a commodity order is generated in response to a payment success operation.

By integrating the payment component in the applet, the embodiments of the present disclosure may enable the user to use an applet cashier for payment after the order is submitted, which may ensure a closed-loop payment in the applet, achieve a one-stop connection in a payment scenario, and effectively avoid a problem of process fragmentation caused by jumping to a third-party payment page during the applet payment. In this way, the ordering process of the user may be effectively shortened, and the shopping experience of the user may be improved.

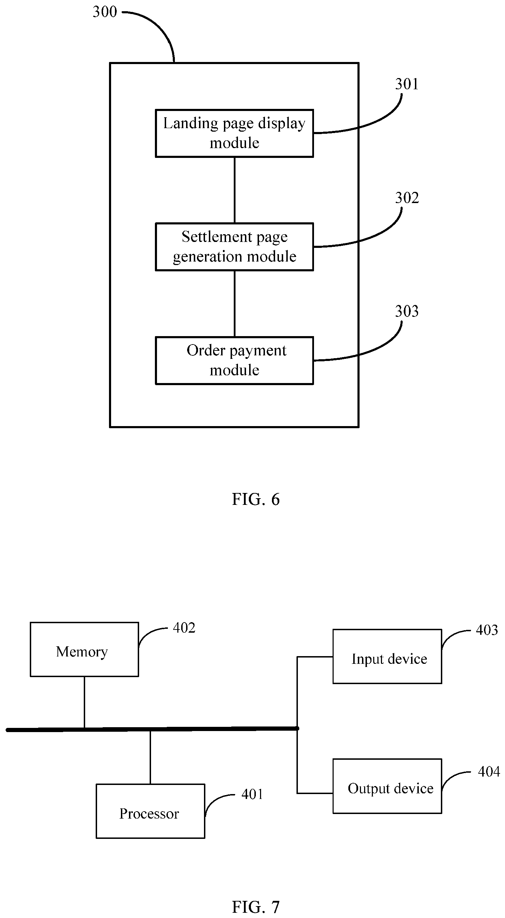

FIG. 6 shows a block diagram of a component of processing a commodity applied to an applet provided by the embodiments of the present disclosure.

Referring to FIG. 6, the embodiments of the present disclosure provide a component 300 of processing a commodity applied to an applet. The component 300 of processing the commodity may be integrated into the applet. The component 300 of processing the commodity includes a landing page display module 301, a settlement page generation module 302, and an order payment module 303.

The landing page display module 301 is used to display a commodity landing page in response to a commodity landing page call request of a host platform. The settlement page generation module 302 is used to acquire a delivery address information for a user on a commodity order settlement page by using a preset address component, in response to a user operation of placing the order for the commodity on the commodity landing page. The order payment module 303 is used to call a preset payment component to perform an order payment operation, in response to a user operation of submitting the order, so as to generate a commodity order.

In some embodiments, the component 300 of processing the commodity may further include a login module used to: transmit a user login authorization request to the host platform in response to the commodity landing page call request of the host platform; acquire a user login information and log in according to the user login information, in response to a login authorization operation of the user. The user login information may contain a user identification for the user.

In some embodiments, the settlement page generation module 302 may include a settlement page generation sub-module and an address editing sub-module. The address editing sub-module is used to acquire the delivery address information for the user on the commodity order settlement page by using the preset address component. The settlement page generation sub-module is used to generate and display the commodity order settlement page before the address editing sub-module acquires the delivery address information for the user on the commodity order settlement page by using the preset address component. The commodity order settlement page is integrated with the address component and the payment component.

In some embodiments, the settlement page generation sub-module may be further used to call the preset address component to acquire a preset address list for the user before generating and displaying the commodity order settlement page, and the preset address list may contain at least one user address information previously set by the user.

In some embodiments, the address editing sub-module may be used to: call the address component to display a preset address book page in response to a user operation of selecting or editing an address through the address component, the address book page contains the preset address list; and determine the delivery address information for the user and return to the commodity order settlement page, in response to a user operation of selecting a user address information from the preset address list.

In some embodiments, the preset address book page may further contain an add-address-on-local entry, and the address editing sub-module may be further used to: display an add-address-on-local page in response to a user operation of clicking the add-address-on-local entry; and add a new user address information to the preset address list and return to the preset address book page, in response to a user operation of adding the new user address information on the add-address-on-local page.

In some embodiments, the preset address book page may further contain an add-address-on-server entry, and the address editing sub-module may be further used to: identify, according to the pre-acquired user identification for the user, whether the user has previously set an on-server user address list on a preset server or not, in response to a user operation of clicking the add-address-on-server entry; display an add-new-address-on-server page in response to identifying that the user does not previously set the on-server user address list on the preset server; and add a new user address information to the preset address list and return to the preset address book page, in response to a user operation of adding the new user address information on the add-new-address-on-server page.

In some embodiments, the address editing module may be further used to: acquire and display an on-server address book page in response to identifying that the user has previously set the on-server user address list on the preset server, the on-server address book page contains the on-server user address list and an add-new-address-on-server entry; add a user address information to the preset address list and return to the preset address book page, in response to a user operation of selecting the user address information from the on-server user address list; display the add-new-address-on-server page in response to a user operation of clicking the add-new-address-on-server entry on the on-server address book page; and add a new user address information to the preset address list and return to the preset address book page, in response to a user operation of adding the new user address information on the add-new-address-on-server page.

In addition, the component of processing the commodity provided by the embodiments of the present disclosure may be used to perform the method of processing the commodity described above. For a relevant description of the component of processing the commodity, reference may be made to the above description of the method of processing the commodity, which will not be repeated here.

FIG. 7 shows a block diagram of an electronic device provided by the embodiments of the present disclosure.

Referring to FIG. 7, the embodiments of the present disclosure provide an electronic device. The electronic device may include at least one processor 401, a memory 402 communicatively connected to the at least one processor 401, and interface(s) for connecting various components, including high-speed interface(s) and low-speed interface(s). The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic devices may be connected in such a manner that each device provides a part of necessary operations (for example, as a server array, a group of blade servers, or a multi-processor system). In FIG. 7, a processor 401 is illustrated by way of example.

The memory 402 stores one or more instructions executable by the at least one processor 401, and the one or more instructions may be executed by the at least one processor 401 to cause the at least one processor 401 to perform the method of processing the commodity described above.

The memory 402, as a non-transitory computer-readable storage medium, may be used to store non-transitory software programs, non-transitory computer-executable programs and modules, such as program instructions/modules corresponding to the method of processing the commodity in the embodiments of the present disclosure. The processor 401 may execute various functional applications and data processing of the server by executing the non-transient software programs, instructions and modules stored in the memory 402, thereby implementing the method of processing the commodity in the embodiments of the method mentioned above.

The memory 402 may include a program storage area and a data storage area. The program storage area may store an operating system and an application program required by at least one function. The data storage area may store data etc. generated by using the electronic device. In addition, the memory 402 may include a high-speed random access memory, and may further include a non-transitory memory, such as at least one magnetic disk storage device, a flash memory device, or other non-transitory solid-state storage devices. In some embodiments, the memory 402 may optionally include a memory provided remotely with respect to the processor 401, and such remote memory may be connected through a network to the electronic device. Examples of the above-mentioned network include, but are not limited to the Internet, intranet, local area network, mobile communication network, and combination thereof.

In the embodiments of the present disclosure, the electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

The electronic device may further include an input device 403 and an output device 404. The processor 401, the memory 402, the input device 403 and the output device 404 may be connected by a bus or in other manners. In FIG. 7, the connection by a bus is illustrated by way of example.

The input device 403 may receive input information of numbers or character, and generate key input signals related to user settings and function control of the electronic device, such as a touch screen, a keypad, a mouse, a track pad, a touchpad, a pointing stick, one or more mouse buttons, a trackball, a joystick, and so on. The output device 404 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

In addition, the embodiments of the present disclosure further provide a computer-readable medium having a computer program stored thereon, and the computer program when executed may implement the method of processing the commodity described above.

According to the embodiments of the present disclosure, there is further provided a computer program product containing a computer program, and the computer program when executed by a processor may implement the method of processing the commodity described above.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor. The computer-readable medium may include a computer storage medium (or non-transitory medium) and a communication medium (or transitory medium).

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other.

According to the technical solutions of the embodiments of the present disclosure, after the host platform recommends a commodity advertisement to the user, when the user clicks the commodity advertisement on the host platform, the commodity landing page may be displayed by calling an applet pre-integrated with an address component and a payment component, so that when the user places an order, the address component may be called to acquire the delivery address information of the user, and the payment component may be called to perform the payment operation, which may effectively shorten a shopping and ordering process of the user. In this way, in the class II e-commerce scenario, the user may quickly perform the ordering operation, the shopping experience of the user may be improved, and then an order conversion rate of the commodity may be effectively improved.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

It may be understood that the above implementations are merely exemplary implementations used to illustrate the principle of the present disclosure, and the above specific implementations do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. An applet-based method of processing a commodity, wherein the applet is pre-integrated with an address component and a payment component, and the method of processing the commodity comprises:
displaying a commodity landing page in response to a commodity landing page call request of a host platform;
acquiring a delivery address information for a user on a commodity order settlement page by using the preset address component, in response to a user operation of placing an order for the commodity on the commodity landing page; and
calling the preset payment component to perform an order payment operation, in response to a user operation of submitting the order, so as to generate a commodity order.

2. The method of processing the commodity according to claim 1, further comprising: before acquiring the delivery address information for the user on the commodity order settlement page by using the preset address component,
generating and displaying the commodity order settlement page, wherein the commodity order settlement page is integrated with the address component and the payment component.

3. The method of processing the commodity according to claim 1, further comprising: before displaying the commodity landing page,
transmitting a user login authorization request to the host platform in response to the commodity landing page call request of the host platform; and
acquiring a user login information and logging in according to the user login information, in response to a login authorization operation of the user, wherein the user login information contains a user identification for the user.

4. The method of processing the commodity according to claim 2, further comprising: before generating and displaying the commodity order settlement page,
calling the preset address component to acquire a preset address list for the user, wherein the preset address list contains at least one user address information previously set by the user;
wherein acquiring the delivery address information for the user on the commodity order settlement page by using the preset address component comprises:
calling the address component to display a preset address book page in response to a user operation of selecting or editing an address through the address component, wherein the preset address book page contains the preset address list; and
determining the delivery address information for the user and returning to the commodity order settlement page, in response to a user operation of selecting a user address information from the preset address list.

5. The method of processing the commodity according to claim 4, wherein the preset address book page further contains an add-address-on-local entry, and the method of processing the commodity further comprises: before determining the delivery address information for the user and returning to the commodity order settlement page, in response to the user operation of selecting the user address information from the preset address list,
displaying an add-address-on-local page in response to a user operation of clicking the add-address-on-local entry; and
adding a new user address information to the preset address list and returning to the preset address book page, in response to a user operation of adding the new user address information on the add-address-on-local page.

6. The method of processing the commodity according to claim 4, wherein the preset address book page further contains an add-address-on-server entry, and the method of processing the commodity further comprises: before determining the delivery address information for the user and returning to the commodity order settlement page, in response to the user operation of selecting the user address information from the preset address list,
identifying, according to the pre-acquired user identification for the user, whether the user has previously set an on-server user address list on a preset server or not, in response to a user operation of clicking the add-address-on-server entry;
displaying an add-new-address-on-server page in response to identifying that the user does not previously set the on-server user address list on the preset server; and
adding a new user address information to the preset address list and returning to the preset address book page, in response to a user operation of adding the new user address information on the add-new-address-on-server page.

7. The method of processing the commodity according to claim 6, further comprising: after identifying whether the user has previously set the on-server user address list on the preset server or not,
acquiring and displaying an on-server address book page in response to identifying that the user has previously set the on-server user address list on the preset server, wherein the on-server address book page contains the on-server user address list; and
adding a user address information to the preset address list and returning to the preset address book page, in response to a user operation of selecting the user address information from the on-server user address list.

8. The method of processing the commodity according to claim 6, further comprising: after identifying whether the user has previously set the on-server user address list on the preset server or not,
acquiring and displaying an on-server address book page in response to identifying that the user has previously set the on-server user address list on the preset server, wherein the on-server address book page contains the on-server user address list and an add-new-address-on-server entry;
displaying the add-new-address-on-server page in response to a user operation of clicking the add-new-address-on-server entry on the on-server address book page; and
adding a new user address information to the preset address list and returning to the preset address book page, in response to a user operation of adding the new user address information on the add-new-address-on-server page.

9. A component of processing a commodity applied to an applet, comprising:
a landing page display module configured to display a commodity landing page in response to a commodity landing page call request of a host platform;
a settlement page generation module configured to acquire a delivery address information for a user on a commodity order settlement page by using a preset address component, in response to a user operation of placing an order for the commodity on the commodity landing page; and
an order payment module configured to call a preset payment component to perform an order payment operation, in response to a user operation of submitting the order, so as to generate a commodity order.

10. The component of processing the commodity according to claim 9, wherein the settlement page generation module comprises:
a settlement page generation sub-module configured to generate and display the commodity order settlement page in response to the user operation of placing the order for the commodity on the commodity landing page, wherein the commodity order settlement page is integrated with the address component and the payment component; and
an address editing sub-module configured to acquire the delivery address information for the user on the commodity order settlement page by using the preset address component.

11. The component of processing the commodity according to claim 10, wherein the settlement page generation sub-module is further configured to call the preset address component to acquire a preset address list for the user before generating and displaying the commodity order settlement page, and the preset address list contains at least one user address information previously set by the user; and
wherein the address editing sub-module is further configured to: call the address component to display a preset address book page in response to a user operation of selecting or editing an address through the address component, wherein the preset address book page contains the preset address list; and determine the delivery address information for the user and return to the commodity order settlement page, in response to a user operation of selecting a user address information from the preset address list.

12. The component of processing the commodity according to claim 11, wherein the preset address book page further contains an add-address-on-local entry; and
wherein the address editing sub-module is further configured to: display an add-address-on-local page in response to a user operation of clicking the add-address-on-local entry; add a new user address information to the preset address list and return to the preset address book page, in response to a user operation of adding the new user address information on the add-address-on-local page.

13. The component of processing the commodity according to claim 11, wherein the preset address book page further contains an add-address-on-server entry; and
wherein the address editing sub-module is further configured to:
identify, according to the pre-acquired user identification for the user, whether the user has previously set an on-server user address list on a preset server or not, in response to a user operation of clicking the add-address-on-server entry;
display an add-new-address-on-server page in response to identifying that the user does not previously set the on-server user address list on the preset server; and
add a new user address information to the preset address list and return to the preset address book page, in response to a user operation of adding the new user address information on the add-new-address-on-server page.

14. The component of processing the commodity according to claim 13, wherein the address editing module is further configured to:
acquire and display an on-server address book page in response to identifying that the user has previously set the on-server user address list on the preset server, wherein the on-server address book page contains the on-server user address list and an add-new-address-on-server entry;
add a user address information to the preset address list and return to the preset address book page, in response to a user operation of selecting the user address information from the on-server user address list;
display the add-new-address-on-server page in response to a user operation of clicking the add-new-address-on-server entry on the on-server address book page; and
add a new user address information to the preset address list and return to the preset address book page, in response to a user operation of adding the new user address information on the add-new-address-on-server page.

15. An electronic device, comprising:
at least one processor; and
a memory communicatively connected to the at least one processor, wherein the memory stores one or more instructions executable by the at least one processor, and the one or more instructions, when executed by the at least one processor, cause the at least one processor to implement the method of processing the commodity according to any one of claims 1 to 8.

16. A computer-readable storage medium having a computer program stored thereon, wherein the computer program, when executed, is allowed to implement the method of processing the commodity according to any one of claims 1 to 8.

17. A computer program product containing a computer program, wherein the computer program, when executed by a processor, is allowed to implement the method of processing the commodity according to any one of claims 1 to 8.
